# EUROPEAN PATENT SPECIFICATION

(11) **EP 0 552 027 B1**
(45) Date of publication and mention of the grant of the patent: **03.04.1996**
(21) Application number: 93300203.2
(22) Date of filing: 14.01.1993
(51) Int. Cl.: B62D 53/00

(54) **Articulated shuttlecar**
Gelenkiger Pendelwagen
Chariot va-et-vient articulé

(30) Priority: 14.01.1992 GB 9200678
(43) Date of publication of application: 21.07.1993
(73) Proprietor: DOSCO OVERSEAS ENGINEERING LIMITED, Tuxford, Newark Nottinghamshire, NG22 0PQ (GB)
(72) Inventor: Etherington, Michael, Abingdon, Virginia 24210 (US)
(74) Representative: Carpmael, John William Maurice

(56) References cited:
- GB-A- 1 155 847
- US-A- 3 504 753
- US-A- 4 090 627
- US-A- 4 291 777

## Description

The present invention relates to mine haulage vehicles, and in particular to shuttlecars.

It is a requirement of underground mining that loose mined material be transported from the mining face. In many situations, it may not be possible to transport the loose material by means of a fixed conveyor.

For example, the path to be travelled may be too long or tortuous, or it may be necessary to intersect with other major underground thoroughfares in such a way that a fixed conveyor would cause an obstruction. In these and similar circumstances it may be necessary to use a vehicle to transport the loose material. Such a vehicle must be adapted to operate within the confines of the mine. It must, therefore, be low, robust and able to operate on undulating terrain, as well as able to negotiate tight-radius turns in between tunnels.

A variety of such vehicles has been designed. These are broadly subdivisible into a number of categories, among which are scoops, ram cars and shuttlecars. The first two categories, scoops and ram cars, comprise tractor sections comprising or connected to load-carrying shovels or cargo areas. Examples of such devices are manufactured by Envirotech Corp., and marketed under the EIMCO label.

In order to negotiate tight-radius turns, some scoops are horizontally articulated about a vertical axis. This allows them to be turned more easily both in corners and when it is required to discharge the scoops, at which time the vehicle must be turned round. Clearly, such a manoeuvre will require considerably space, thus constraining the application of scoop vehicles.

Shuttlecars have the ability to load and unload without turning round. This is achieved by the use of a central conveyor extending lengthwise of the load surface, and which can be operated in order to facilitate loading or to discharge the load. Since the load surface can extend throughout the length of the shuttlecar, the load-carrying capacity of such vehicles is high.

The carrying capacity of the shuttlecar remains constrained, however, by the length, height and width of the vehicle. Height and width of the vehicle are dictated by the height and width of the mine working and are therefore fixed parameters. The length of the shuttlecar is dictated by the necessity to negotiate turns and undulations within the mine. The longer the car, the less able it will be to negotiate sharp turns, and the more it will be upset by undulations in the mine floor. In order to negotiate undulating mine floors, it is known for shuttlecars to be vertically articulated about a horizontal pivot. Such shuttlecars are disclosed in, for example, Canadian Patent No.666032 assigned to Joy Manufacturing Co., and in US-A-4291777. The shuttlecar disclosed in US-A-4291777 has two end sections, and a short central section connected at each of its ends to the end sections by means of horizontal pivots. A central conveyor extends throughout the length of the shuttlecar. This shuttlecar, while it can negotiate the uneven floors of mines, cannot satisfactorily negotiate bends because, due to the heavy loads carried by the shuttlecar, the pivots are not strong enough to withstand the wear and tear to which they are subjected.

A so-called horizontally articulated shuttlecar has been proposed in U.S. Patent No.4160619. However, the disclosed vehicle is only comprised of two body sections, each of which is necessarily shorter than a single-section shuttle car and thus its carrying capacity is not greatly increased. Furthermore, the majority of the load is carried in a load carrying compartment which is located at one end of the vehicle, thus approximating the vehicle to a scoop with a discharge conveyor. The bulk of the vehicle remains lightly loaded, unlike a true shuttlecar wherein the load-carrying compartment stretches throughout the length of the vehicle. The vehicle also suffers from the fact that its horizontal articulation joint is not strong enough to withstand the wear and tear which would be experienced in a mine environment.

We have now developed a true horizontally articulated shuttlecar, wherein the entire vehicle can function as a load-carrier. The car can be articulated into as many units as is desired, with no theoretical limit on the total length of the vehicle. Obviously, this will be limited by practical considerations, but it should be noted that there are only two sections, a front section and a rear section, in the vehicle disclosed in U.S. No.4160619.

According to the invention, therefore, we provide a horizontally articulated shuttlecar having at least three sections forming a centre section and two end sections, each section having a pair of wheels, and a continuous conveyor extending throughout the length of the shuttlecar to transport mined material from one end of the shuttlecar to the other end thereof, characterised in that vertical pivot means connects the centre section to an end of each of the end sections, and in that the conveyor is flexible to be able to bend when pivoting of the sections about one or more of the pivot means occurs.

Preferably, the or each central section of the shuttlecar is divided into two parts by a horizontal pivot. The wheels of each section of the shuttlecar are preferably driven and located on an axis which corresponds with the horizontal pivot axis for the section.

The siting of the horizontal pivot on the wheel axis ensures that the car occupies the least possible vertical space in an undulating mine tunnel and that all the wheels will remain in contact with the ground. Where the shuttlecar is comprised of more than three sections, as is preferred, it is advantageous for every section except the frontmost and rearmost sections to be divided into two parts connected by a horizontal pivot.

Preferably, each wheel is suspended by a height-adjustable suspension system which is advantageously an independent hydraulic suspension system. This gives the vehicle the ability to raise or lower either of the end sections in order to facilitate loading or unloading. In addition, the entire vehicle may be thereby raised or lowered in order to clear obstacles in the mine. Furthermore, the task of wheel changing is facilitated in that the vehicle can simply be raised and subsequently lowered onto a support placed in the vicinity of the wheel which it is required to change. The vehicle will come to rest on the support and the wheel will be raised off the ground as the suspension retracts.

The conveyor is preferably of the centre strand type with a plurality of spaced flight bars and can be of a known construction. The conveyor is entrained around sprockets at each end of the shuttlecar, and its lower arm run is located below the floor of the vehicle. Each of the shuttlecar sections is connected to its adjacent section by an articulation joint which can withstand substantial wear and tear.

The conveyor is advantageously enclosed by sidewalls which run along the entire length of the vehicle, in order to prevent loose material from falling off the conveyor during transit. Preferably, in the region of each articulation joint the side walls have flexible members in order to accommodate the bending movement of the shuttlecar. Preferably, the flexible members comprise a leaf spring arrangement.

The steering of the shuttlecar is advantageously accomplished by the action of piston and cylinder devices exerting force between the sections of the shuttlecar in order to swing one section relative to the other about the articulation joint. The advantage of such a system is that, in co-operation with an electronic control system which is advantageously provided, it allows each section of the all-wheel drive vehicle to follow in the tracks of the leading section.

The shuttlecar is preferably provided with a motor to drive the wheels on each section and an operator station at each end of the vehicle which will accommodate an operator in the reclining position. Furthermore, the shuttlecar is advantageously fitted with a conveyor drive system and a cable reeler, and a transmission system to ensure that drive is provided to the wheels.

It is envisaged that the shuttlecar could be loaded and unloaded at either end, thus minimising the requirement to turn the vehicle round within the mine. To achieve this, the conveyor would have to be reversible.

Two embodiments of the invention are now described by way of example only with reference to the following drawings, in which:-
FIGURE 1 is a schematic side view of a first embodiment of the shuttlecar in a mine tunnel;
FIGURE 2 is a plan view of the shuttlecar of Figure 1, showing the shuttlecar negotiating a corner in a mine tunnel;
FIGURE 3 is a plan view of a second embodiment of shuttlecar comprised of six sections negotiating a similar corner;
FIGURE 4 is a schematic side view of the shuttlecar of Figure 3 in an undulating tunnel, and
FIGURE 5 is a view similar to Figure 4, showing the shuttlecar on the floor of a flat tunnel.

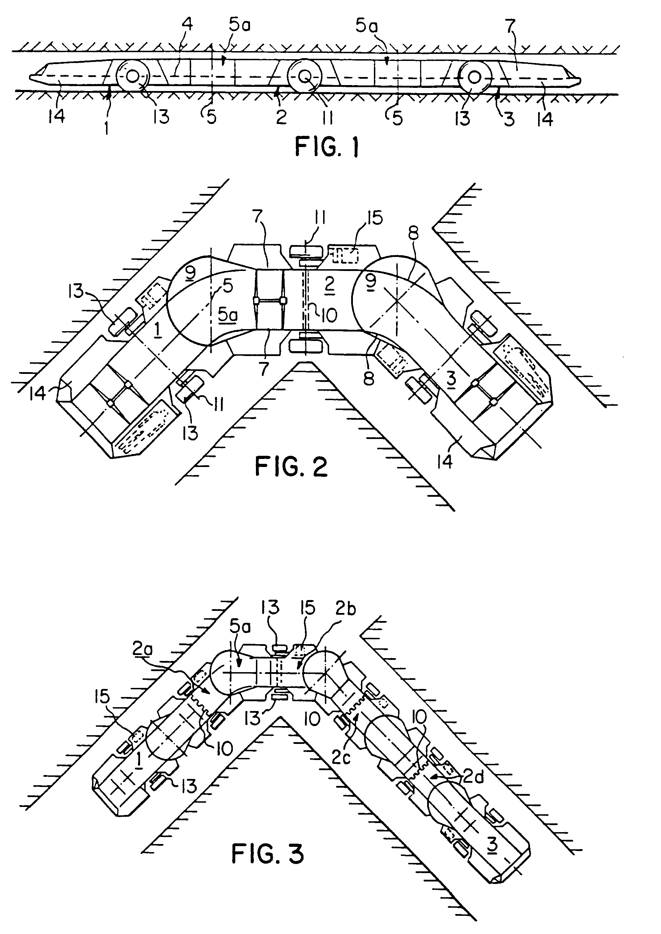

Referring to Figures 1 and 2 of the drawings, the shuttlecar is composed of a first end section 1, a central section 2 and a second end section 3. Both first and second end sections 1 and 3 are provided with an operator station 14, wherein an operator can control the shuttlecar in a reclining position. The provision of operator stations in both end sections means that the shuttlecar can be driven in both directions, and does not have to be turned around.

The shuttlecar has a continuous flexible conveyor 4 which extends throughout the length of the car and which is horizontally flexible. The conveyor is of a centre-chain design, with spaced transverse flight bars 6 and is driven via a two-speed synchronous AC motor (not shown).

Adjacent sections 1 and 2 and 2 and 3 respectively are pivotally connected together about a vertical axis 5 by an articulation joint 5a. This joint is of a special construction to withstand the substantial loads imposed upon it.

The upper run of the conveyor is flanked by retaining walls 7, which define an elongate load carrying compartment along the floor of which the conveyor runs. In the regions in the vicinity of hinges 5, the walls 7 are constructed as a plurality of overlapping flexible leaf spring members 8, which allow the walls to follow the edges of the conveyor as the shuttlecar bends to negotiate a corner.

The centre and end sections 2 and 3 of the shuttlecar both possess arcuate floor sections 9, which overlap another plate in the joint area 5, 5a, and are received in cooperating recesses in the floors of the sections to which they are connected. Hence, support for the upper run of the conveyor is continuous when the shuttlecar turns a corner. As can be seen from Figure 2, the conveyor can flex as required when the shuttlecar negotiates a bend, and it will never be unsupported.

A pair of wheels 13 is provided for each shuttlecar section 1, 2 and 3, each pair being rotatable about a common wheel axis 11, the wheels being suspended on a hydraulic trailing arm suspension system. Each pair of wheels 13 is driven by an electric motor 15 and a transmission system.

The centre section 2 of the shuttlecar is provided with a horizontal hinge 10 which is coaxial with the wheel axis 11. The hinge allows the shuttlecar to flex vertically, so that it can negotiate mine floor undulations in the minimum headroom.

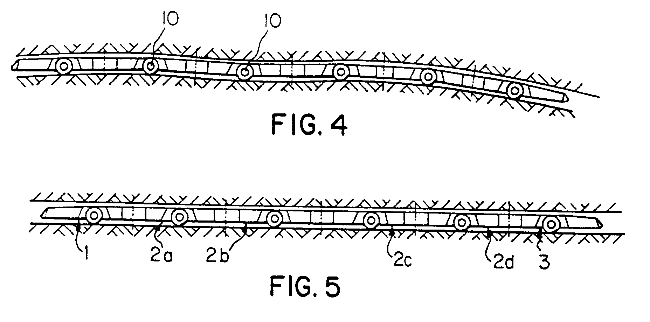

Referring to Figures 3 and 4, the shuttlecar is provided with a first end section 1, a second end section 3 and four centre sections 2(a) - 2(d). Each of the centre section is fitted with a pair of wheels 13 suspended by a hydraulic suspension system (not shown), and all the wheels are driven by motors 15. Each section of the shuttlecar is independently steered by a rack and pinion steering system (not shown) which exerts force between adjacent sections in order to swing adjacent sections relative to one another about the horizontal articulation joints 5a. Furthermore, each central section is provided with a horizontal pivot 10 to permit the shuttlecar to articulate in the vertical plane. The shuttlecar is thereby capable of articulating in the horizontal plane as shown in Figure 3, and in the vertical plane in response to undulations in the mine floor, as shown in Figure 4.

It will be understood that the invention is described herein by way of example only, and that a number of modifications may be made to the described embodiments by a person skilled in the art which are within the scope of the invention.

The vertical articulation joint 5a connecting each section together may be of the construction disclosed in our co-pending European Application EP-A-0 552 026 claiming priority from U.K. Patent Application No.9200660.0.

## Claims

1. A horizontally articulated shuttlecar having at least three sections forming a centre section and two end sections, each section having a pair of wheels, and a continuous conveyor extending throughout the length of the shuttlecar to transport mined material from one end of the shuttlecar to the other end thereof, characterised in that vertical pivot means (5) connects the centre section (2) to an end of each of the end sections (1,3), and in that the conveyor (4) is flexible to be able to bend when pivoting of the sections (1,2,3) about one or more of the pivot means (5) occurs.

2. A shuttlecar according to claim 1 wherein a continuous flexible raised retaining means (7) is located along each edge to maintain mined material on the conveyor (4).

3. A shuttlecar according to claim 1 or 2 comprising a plurality of centre sections (2a,2b,2c,2d) adjacent ones of which are connected by a vertical pivot (5).

4. A shuttlecar according to any one of claims 1-3 wherein all the wheels (13) are driven.

5. A shuttlecar according to any one of claims 1-4 wherein the or each central section (2a,2b,2c,2d) has a horizontal pivot (11).

6. A shuttlecar according to claim 5 wherein each section has a single pair of wheels (13), the axes (11) of which lie in a central region of the section and coincide with the horizontal pivot (11) for the section.

7. A shuttlecar according to any one of claims 4-6 wherein each wheel (13) is suspended on an adjustable suspension system, thus allowing any section of the shuttlecar to be raised or lowered.

8. A shuttlecar as claimed in any preceding claim, which is reversible and has an operator station (14) on each end section (1,3).

9. A shuttlecar according to claim 8 which can be loaded or unloaded from either end.

10. An articulated shuttlecar according to any one of the preceding claims, wherein the or each section (2 or 2a,2b,2c,2d) of the shuttlecar between the end sections (1,3) is independently steered so that the section can follow in the tracks of that ahead of it.

## Patentansprüche

1. Horizontal gelenkiger Pendelwagen, mit mindestens drei Abschnitten, die einen mittleren Abschnitt und zwei Endabschnitte bilden, wobei jeder Abschnitt ein Paar Räder hat, und einem kontinuierlichen Förderer, der sich über die Länge des Pendelwagens erstreckt, um gefördertes Material von einem Ende des Pendelwagens nach dem anderen zu befördern, dadurch gekennzeichnet, daß ein vertikales Drehzapfenmittel (5) den mittleren Abschnitt (2) mit einem Ende von jedem der Endabschnitte (1, 3) verbindet, und daß der Förderer (4) flexibel ist, damit er sich biegen kann, wenn eine Schwenkung der Abschnitte (1, 2, 3) um eines oder mehr der Drehzapfenmittel (5) erfolgt.

2. Pendelwagen gemäß Anspruch 1, wobei ein kontinuierliches, flexibles, erhöhtes Rückhaltemittel (7) längs jedes Randes angeordnet ist, um das geförderte Material auf dem Förderer (4) zu halten.

3. Pendelwagen gemäß Anspruch 1 oder 2, der eine Vielzahl von mittleren Abschnitten (2a, 2b, 2c, 2d) aufweist, von denen benachbarte Abschnitte durch einen vertikalen Drehzapfen (5) miteinander verbunden sind.

4. Pendelwagen gemäß irgendeinem der Ansprüche 1-3, wobei alle Räder (13) angetrieben werden.

5. Pendelwagen gemäß irgendeinem der Ansprüche 1-4, wobei der oder jeder mittlere Abschnitt (2a, 2b, 2c, 2d) einen horizontalen Drehzapfen (11) hat.

6. Pendelwagen gemäß Anspruch 5, wobei jeder Abschnitt ein einzelnes Paar Räder (13) hat, deren Achsen (11) in einem mittleren Gebiet des Abschnitts liegen und mit dem horizontalen Drehzapfen (11) für den Abschnitt zusammenfallen.

7. Pendelwagen gemäß irgendeinem der Ansprüche 4-6, wobei jedes Rad (13) an einem einstellbaren Aufhängungssystem aufgehängt ist, wodurch jeder Abschnitt des Pendelwagens angehoben oder abgesenkt werden kann.

8. Pendelwagen gemäß irgendeinem vorhergehenden Anspruch, wobei dieser Pendelwagen umkehrbar ist und einen Führerstand (14) in jedem Endabschnitt (1, 3) hat.

9. Pendelwagen gemäß Anspruch 8, wobei dieser Pendelwagen von jedem Ende aus beladen oder entladen werden kann.

10. Gelenkiger Pendelwagen gemäß irgendeinem der vorhergehenden Ansprüche, wobei der oder jeder Abschnitt (2 oder 2a, 2b, 2c, 2d) des Pendelwagens zwischen den Endabschnitten (1, 3) auf unabhängige Weise gelenkt wird, so daß der Abschnitt in den Spuren des davor gelegenen Abschnitts folgen kann.

## Revendications

1. Chariot va-et-vient articulé horizontalement ayant au moins trois sections formant une section de centre et deux sections d'extrémité, chaque section ayant une paire de roues, et un convoyeur continu s'étendant sur toute la longueur du chariot va-et-vient pour acheminer du matériau minier d'une extrémité du chariot va-et-vient à l'autre extrémité de celui-ci, caractérisé en ce que les moyens formant pivot vertical (5) relient la section de centre (2) à une extrémité de chacune des sections d'extrémité (1, 3), et en ce que le convoyeur (4) est flexible afin de pouvoir se plier lorsque le pivotement des sections (1, 2, 3) se produit autour d'un ou de plusieurs moyens formant pivot (5).

2. Chariot va-et-vient selon la revendication 1, dans lequel des moyens de retenue flexibles dressés vers le haut (7) sont situés le long de chaque bord pour maintenir le matériau minier sur le convoyeur (4).

3. Chariot va-et-vient selon la revendication 1 ou 2, comprenant une pluralité de sections de centre (2a, 2b, 2c, 2d), dont des sections adjacentes sont reliées par un pivot vertical (5).

4. Chariot va-et-vient selon l'une quelconque des revendications 1 à 3, dans lequel toutes les roues (13) sont entraînées.

5. Chariot va-et-vient selon l'une quelconque des revendications 1 à 4, dans lequel la ou chaque section centrale (2a, 2b, 2c, 2d) a un pivot horizontal (11).

6. Chariot va-et-vient selon la revendication 5, dans lequel chaque section a une seule paire de roues (13), dont les axes (11) sont placés dans une région centrale de la section et coïncident avec le pivot horizontal (11) pour la section.

7. Chariot va-et-vient selon l'une quelconque des revendications 4 à 6, dans lequel chaque roue (13) est suspendue à un système de suspension réglable, permettant ainsi à n'importe quelle section du chariot va-et-vient d'être soulevée ou abaissée.

8. Chariot va-et-vient selon l'une quelconque des revendications précédentes, qui est réversible et a un poste d'opérateur (14) à chaque section d'extrémité (1, 3).

9. Chariot va-et-vient selon la revendication 8, qui peut être chargé ou déchargé à partir de l'une ou l'autre extrémité.

10. Chariot va-et-vient articulé selon l'une quelconque des revendications précédentes, dans lequel la ou chaque section (2 ou 2a, 2b, 2c, 2d) du chariot va-et-vient située entre les sections d'extrémité (1, 3) est manoeuvrée indépendamment de sorte que la section peut suivre les traces de celle qui la précède.
